(19) Europäisches Patentamt
European Patent Office
Office européen des brevets

(11) **EP 4 617 515 A1**

(12) **EUROPEAN PATENT APPLICATION**
published in accordance with Art. 153(4) EPC

(43) Date of publication:
**17.09.2025 Bulletin 2025/38**

(21) Application number: 24818611.6

(22) Date of filing: **03.06.2024**

(51) International Patent Classification (IPC):
*F16B 35/00* (2006.01)   *F16B 33/06* (2006.01)
*F16B 33/00* (2006.01)   *B23P 15/00* (2006.01)
*C21D 9/00* (2006.01)

(52) Cooperative Patent Classification (CPC):
Y02E 10/72

(86) International application number:
**PCT/CN2024/097033**

(87) International publication number:
**WO 2024/251079 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.06.2023 CN 202310660196**

(71) Applicants:
- **CSSC HAIWEI TECH CO., LTD.**
  **Zhengzhou, Henan 450001 (CN)**
- **713TH RESEARCH INSTITUTE OF CHINA STATE SHIPBUILDING CORPORATION LIMITED**
  **Zhengzhou, Henan 450015 (CN)**

(72) Inventors:
- **YANG, Zhonggui**
  **Zhengzhou, Henan 450001 (CN)**
- **BAI, Jie**
  **Zhengzhou, Henan 450001 (CN)**
- **WANG, Zhimin**
  **Zhengzhou, Henan 450001 (CN)**
- **LI, Menghan**
  **Zhengzhou, Henan 450001 (CN)**
- **DING, Yongchun**
  **Zhengzhou, Henan 450001 (CN)**
- **LIU, Ping**
  **Zhengzhou, Henan 450015 (CN)**
- **LI, Xingyao**
  **Zhengzhou, Henan 450001 (CN)**
- **LI, Zejun**
  **Zhengzhou, Henan 450001 (CN)**
- **MENG, Deming**
  **Zhengzhou, Henan 450001 (CN)**
- **WANG, Ziqiang**
  **Zhengzhou, Henan 450001 (CN)**
- **WEN, Jiahao**
  **Zhengzhou, Henan 450001 (CN)**
- **ZHANG, Yong**
  **Zhengzhou, Henan 450001 (CN)**
- **NIU, Rongge**
  **Zhengzhou, Henan 450001 (CN)**
- **WU, Lin**
  **Zhengzhou, Henan 450001 (CN)**
- **XIAO, Yukun**
  **Zhengzhou, Henan 450001 (CN)**
- **JIA, Yanwei**
  **Zhengzhou, Henan 450001 (CN)**

(74) Representative: **Gulde & Partner**
**Patent- und Rechtsanwaltskanzlei mbB**
**Berliner Freiheit 2**
**10785 Berlin (DE)**

(54) **DOUBLE-END STUD FOR CONNECTION OF BLADE ROOT OF WIND TURBINE AND MACHINING METHOD OF DOUBLE-END STUD**

(57)    A double-end stud (2) for connection of a blade root (1) of a wind turbine and a machining method for the double-end stud are provided. An external thread of a threaded section (21) of the double-end stud (2) is a rounded thread. A nominal diameter of the rounded thread is $d_{nominal}$=36 mm-40 mm, a pitch of the rounded thread is $Pr=(0.153-0.192)d_{nominal}$, a height of the rounded thread is $hr=(0.37-0.44)Pr$, and a minor diameter of the rounded thread is $d1r-d_{nominal}-0.8746Pr$.

FIG. 3

## Description

### TECHNICAL FIELD

The invention relates to a double-end stud for connection of a blade root of a wind turbine and a machining method of the double-end stud, belonging to the technical field of double-end studs.

### BACKGROUND

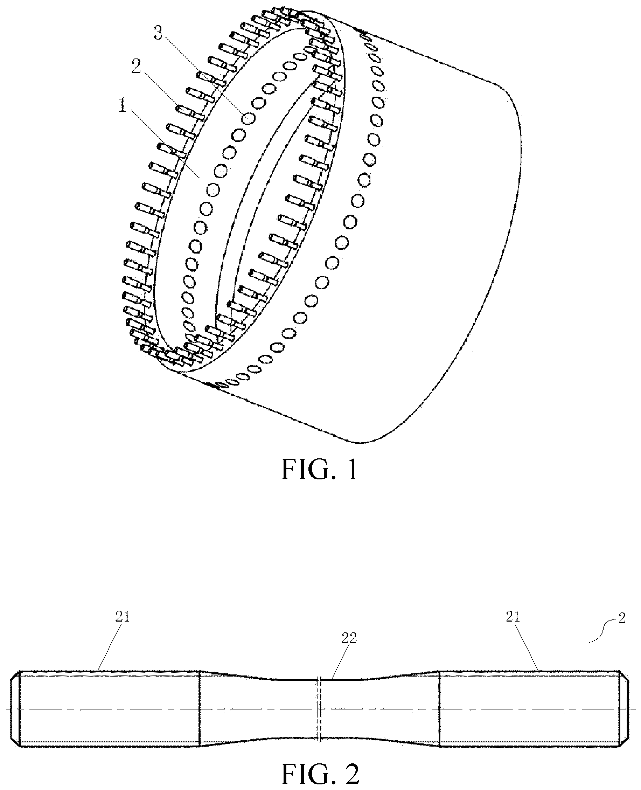

In a wind turbine, the blade is usually fixed to the hub of the wind turbine by means of T-bolt connection, embedded bolt connection, inserted bolt connection or the like. No matter which connection means is adopted, the blade needs to be fixed with a double-end stud, and meanwhile the load acting on the blade is transmitted to the hub, which is the only "intermediary" for the connection between the blade and the hub. FIG. 1 is a structural view showing T-bolt connection at a blade root of a wind turbine in the prior art. The blade root 1 is uniformly distributed with multiple round nuts 3 along a circumferential direction, and one end of a double-end stud 2 is threadedly connected to the round nut 3. The conventional structure of a double-end stud is shown in FIG. 2. The double-end stud 2 has threaded sections 21 at two ends and a smooth section 22 in a middle.

During the operation of the wind turbine, the double-end stud at the blade root is subjected to shocks and vibrations which form an alternating load, so when the double-end stud is designed, it is necessary to ensure that the double-end stud does not undergo static strength fracture under the maximum load, and it is also necessary to consider that the double-end stud does not undergo fatigue fracture under the action of periodic high stress. In most cases, the fracture of the double-end stud is caused by fatigue failure under the alternating load and usually occurs at the thread and the end of the stud, and the fracture surface is mostly located at the root of the thread (the starting position of the engagement of the connecting stud, i.e., the first 3 engaged threads of the thread connection, is mostly prone to fatigue fracture). For the problem of fatigue fracture of the double-end stud, typical technical means are adopted such as: adjustment of the material formula to improve the fatigue resistance, thread rolling to strengthen the surface, and laser surface quenching to increase the residual compressive stress of the surface. The double-end stud usually adopts a metric thread or a metric MJ thread. According to GB/T196, GJB3.1A and Chinese patent for utility model with the Publication No. CN201439785U, the ratio of the major diameter to the pitch of the thread is 9.0 or above, and the radius of rounded root of the common metric thread is not less than 0.125P (P is the pitch), which causes severe stress concentration at the root and high tendency to fatigue fracture. For the MJ thread, under the condition of a constant pitch of the thread, the rounded root is increased, the stress area of the MJ thread is made greater than that of the common thread, and the rounded root is controlled within 0.1501P-0.18042P. According to Paragraph [0025] in the specification of Chinese Patent for utility model with the Publication No. CN201439785U, the Spiralock thread adopts a larger rounded root structure to improve the fatigue strength, and its stress area of thread is greater than that of the MJ thread and the common thread.

Compared with the common metric thread, the MJ thread or the like, the rounded thread connection pair has great advantages in fabrication, structural strength, fatigue resistance and etc. For example, Chinese Patent Application with the publication No. CN109967982A discloses a preparation method for a rounded thread anchor bolt assembly for a wind turbine. An external thread on the anchor bolt is a continuous rounded thread including a rounded crest, a straight section, a rounded root and a straight section that are connected sequentially. The straight section is respectively tangent to the rounded crest and the rounded root. Since the rounded thread has a large pitch and an unequal thickness, an axial fit clearance is large, the stress concentration can be reduced, and the fatigue resistance can be improved. In addition, Chinese patent for utility model with the Publication No. CN209818480U discloses a high-strength rounded thread connection pair, which adopts rounded threads. The internal thread and the external thread are in surface contact, so the force distribution is uniform, which can effectively reduce the stress concentration when the thread is loaded and improve the fatigue resistance. This patent discloses two rounded thread structures having major diameters of 42 and 48 and pitches of 6.35 and 8.5 respectively, the ratios of the pitch to the major diameter of the rounded thread are 0.151 and 0.177 respectively, and the stress areas of the rounded threads are respectively higher than the stress area of the common thread.

The rounded thread connection pair improves the fatigue resistance when used in tower bolt connection and anchor bolt connection of the wind turbine. However, the double-end stud for connection of a blade root of a wind turbine is used in a more complicated environment, and bears a shock-vibration alternating stress load. Due to the limited installation space and the consideration of the overall strength of the blade, the major diameter of the external thread is generally not more than 40 mm, and the requirement for fatigue resistance may be higher. The existing technical means to improve the fatigue performance by changing the thread structure mainly includes increasing the radius of rounded root, adopting the conventional rounded thread structure and increasing the stress area of thread, which is very limited. In addition, the double-end stud for a blade root is usually surface-treated by Dacromet. Dacromet is a surface treatment process of reaction and curing by baking at a certain temperature for a period of time. The baking temperature is typically 300°C or above. The Dacromet coating has no risk of hydrogen embrittlement, and can be divided into two types: zinc-chrome coating and aluminum-zinc coating. When the double-end stud is subjected to surface anticorrosion treatment, the curing temperature may affect the corrosion resistance and fatigue performance of the coating.

In the field of double-end studs for a blade of a wind turbine, the fatigue load of the double-end stud is usually less than its maximum operating load. Generally, it is required that the achievement of a fatigue life of $5\times10^6$ cycles under the specified fatigue stress amplitude can be considered as the realization of the full life. Under the condition of satisfying both the static strength and the fatigue strength of the double-end stud, how to design the form of the thread of the double-end stud for connection of a blade root of a wind turbine and the machining method thereof, so as to further improve the fatigue resistance of the double-end stud and ensure the safe and stable operation of the wind turbine, is a technical problem that needs to be solved urgently by technicians in the art.

## SUMMARY OF THE INVENTION

An objective of the invention is to provide a double-end stud for connection of a blade root of a wind turbine with higher fatigue resistance, which is suitable for connection of a blade of a wind turbine. Another objective of the invention is to provide a machining method for the double-end stud for connection of a blade root of a wind turbine to ensure the fatigue resistance of the double-end stud.

In order to achieve the above objectives, the double-end stud for connection of a blade root of a wind turbine in the invention adopts the following technical solutions:

The double-end stud for connection of a blade root of a wind turbine includes threaded sections at two ends and a smooth section in a middle. An external thread of the threaded section is a rounded thread. The rounded thread includes a rounded crest, a straight section, a rounded root and a straight section that are connected sequentially, and the straight section is respectively tangent to the rounded crest and the rounded root. A nominal diameter of the rounded thread is $d_{nominal}$=36 mm-40 mm, a pitch of the rounded thread is Pr=(0.153-0.192)$d_{nominal}$, a height of the rounded thread is hr=(0.37-0.44)Pr, and a minor diameter of the rounded thread is d1r=$d_{nominal}$-0.8746Pr.

The above technical solution has the following beneficial effect: The nominal diameter of the rounded thread (the nominal value of the major diameter of the thread) is $d_{nominal}$=36 mm-40 mm, which is suitable for the occasion where the mounting space for connection of a blade of a wind turbine is limited. Since the fatigue failure load of the double-end stud is much lower than the tensile load, the pitch of the rounded thread is Pr=(0.153-0.192)$d_{nominal}$, the height of the rounded thread is hr=(0.37-0.44)Pr, and the minor diameter of the rounded thread is d1r=$d_{nominal}$-0.8746Pr. With the large pitch, large rounded crest and large rounded root, the transition is smoother, thereby reducing stress concentration. Moreover, the existing technical means of "increasing the radius of the rounded root+increasing the stress area of the thread" is abandoned, so that the stress area of the rounded thread is slightly smaller than the stress area of the common thread, and the ultimate bearing capacity is slightly reduced, but the fatigue performance can be greatly improved while ensuring the basic bearing capacity of the double-end stud.

Further, the external thread of the threaded section is a single-start thread having a thread angle of 60°.

The above technical solution has the following beneficial effect: This makes the double-end stud convenient to fabricate and use.

In order to achieve the above objectives, the machining method for the double-end stud for connection of a blade root of a wind turbine in the invention adopts the following technical solutions:

The machining method for the double-end stud for connection of a blade root of a wind turbine includes blanking, heat treatment, contour turning, thread machining, surface cleaning and surface anticorrosion treatment.

The above technical solution has the following beneficial effect: Through the heat treatment, the strength index and the hardness performance of the double-end stud are ensured; and through the surface cleaning and the surface anticorrosion treatment, the corrosion resistance and the fatigue resistance are ensured.

Further, a material of the double-end stud after the heat treatment has a hardness of 300-350 HB and an elongation of not lower than 12%.

The above technical solution has the following beneficial effect: The material has a certain strength and hardness itself and an elongation of not lower than 12%, which is convenient for subsequent rolling to make greater plastic deformation of the thread surface, so as to improve the residual stress of the thread surface and further improve the fatigue resistance of the double-end stud.

Further, during the thread machining, the rounded thread is machined by axial or radial rolling.

The above technical solution has the following beneficial effect: through the axial or radial rolling, under the combined action of coarse pitch+rounded thread structure+high-strength material, the thread surface undergoes large plastic deformation under the action of rolling force, and the grain flow in threads formed by rolling is intact and has low tendency to cracking, so that the residual stress of the thread surface is significantly increased, which can greatly improve the fatigue resistance of the double-end stud.

Further, during the surface cleaning, the double-end stud is shot-blasted with steel shots having a diameter of

$d_{steel\ shot}=(0.1015-0.125)Pr$.

The above technical solution has the following beneficial effect: compared with the common thread shot-blasting, the steel shots have a larger diameter, which is beneficial to strengthen the surface stress, thereby further improving the fatigue resistance of the double-end stud.

Further, during the surface anticorrosion treatment, a chrome-free zinc-aluminum coating is applied to the whole double-end stud by spraying or dipping.

The above technical solution has the following beneficial effect: the chrome-free zinc-aluminum coating belongs to environmentally friendly Dacromet, which can effectively protect the coating from damage, and reduce the influence of temperature on the residual compressive stress of the thread as compared other surfaces such as zinc-impregnated and hot dip galvanized surfaces, thereby ensuring the fatigue resistance of the double-end stud.

Further, the chrome-free zinc-aluminum coating has a double-layer structure including an undercoat and a topcoat. The undercoat is a solvent-based coating. The topcoat is a water-based sealant or a solvent-based coating. Curing temperatures of the undercoat and the topcoat are both 180-220°C. A total thickness of the coating is 8-25 um.

The above technical solution has the following beneficial effect: The curing temperature of the coating is lower than the curing temperature 300°C of the aluminum-zinc coating in the prior art, which can further reduce the influence of temperature on the residual compressive stress of the thread, thereby further improving the fatigue resistance of the double-end stud.

Further, the chrome-free zinc-aluminum coating has a double-layer structure including an undercoat and a topcoat. The undercoat is a low-temperature fast-curing coating. A curing temperature of the undercoat is 20-80°C. A total thickness of the coating is 8-25 um.

The above technical solution has the following beneficial effect: The curing temperature of the coating is lower, which can further reduce the influence of temperature on the residual compressive stress of the thread, thereby further improving the fatigue resistance of the double-end stud.

## BRIEF DESCRIPTION OF THE DRAWINGS

FIG. 1 is a structural view showing T-bolt connection at a blade root of a wind turbine in the prior art;
FIG. 2 is a structural view of a double-end stud in FIG. 1; and
FIG. 3 is a partial structural view of a rounded thread of a double-end stud in the invention.

In the figures: 1, blade root; 2, double-end stud; 21, threaded section; 211, rounded crest; 212, straight section; 213, rounded root; 214, central axis; 22, smooth section; 3, round nut; $\theta$, thread angle; dr, major diameter of rounded thread; d1r, minor diameter of rounded thread; Pr, pitch of rounded thread; hr, height of rounded thread; and R, radius of rounded crest and rounded root.

## DETAILED DESCRIPTION OF EMBODIMENTS

The features and properties of the invention will be described in further detail in conjunction with embodiments.

Embodiment 1 of double-end stud for connection of blade root of wind turbine (hereinafter referred to as double-end stud) in the invention: The double-end stud in this embodiment specifies the major diameter range of the rounded thread, and is suitable for the occasion where the mounting space for connection of a blade of a wind turbine is limited. By using a large pitch and a large radius of rounded crest and rounded root, the stress concentration of the root and the stress area of the thread are reduced, so that the double-end stud is less prone to fatigue fracture, thereby improving the fatigue resistance.

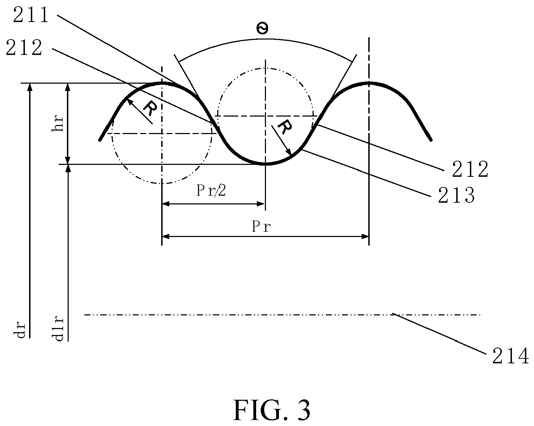

As shown in FIG. 2, the double-end stud 2 includes threaded sections 21 at two ends and a smooth section 22 in a middle. As shown in FIG. 3, an external thread of the threaded section 21 is a single-start rounded thread. The rounded thread includes a rounded crest 211, a straight section 212, a rounded root 213 and a straight section 212 that are connected sequentially. The straight section 212 is respectively tangent to the rounded crest 211 and the rounded root 213. The rounded crest 211 and the rounded root 213 have a same radius R. An included angle between the two straight sections 212, i.e., a thread angle $\theta$, is 60°.

In the invention, the nominal diameter of the rounded thread (the nominal value of the major diameter dr of the rounded thread) is $d_{nominal}=36\ mm-40\ mm$, which is suitable for the occasion where the mounting space for connection of a blade of a wind turbine is limited. Moreover, the pitch of the rounded thread is $Pr=(0.153-0.192)d_{nominal}$, the height of the rounded thread is $hr=(0.37-0.44)Pr$, and the minor diameter of the rounded thread is $d1r=d_{nominal}-0.8746Pr$. In the case of a coarse pitch and a limited height, the radius R of the rounded crest 211 and the rounded root 213 will be increased, so that the transition is smoother, thereby reducing the stress concentration, making the double-end stud less prone to fatigue fracture and improving the fatigue resistance. Besides, with the large pitch, large rounded crest and large rounded root, the transition is smoother, thereby reducing the stress concentration. Moreover, by setting the minor diameter of the rounded thread, the existing technical means of "increasing the radius of the rounded root+increasing the stress area of the thread" is abandoned, so that the stress area of the rounded thread is slightly smaller than the stress area of the common thread, and the ultimate bearing capacity is slightly reduced. Since the fatigue failure load of the double-end stud is much lower than the tensile load, the fatigue performance can be greatly improved while ensuring the basic bearing capacity of the double-end stud.

When the rounded thread of the double-end stud in the invention is designed, as shown in FIG. 3, the thread angle and the single-start thread are kept unchanged, and the pitch of the thread is increased such that $Pr=(0.153-0.192)d_{nominal}$ and the height is $hr=(0.37-0.44)Pr$. The coefficients are selected to obtain the pitch Pr and the height hr of the thread structure. The pitch Pr and the height hr are drawn. An angle of 30° is drawn from the height of the thread to the right, and an angle of 30° is drawn from the root of the thread to the left. A parallel of sides of the two 30° angles is made, such that the distances from the parallel to the arms of the 30° angles are equal. Then, the rounded crest and the rounded root tangent to the parallel are drawn. According to the minor diameter of the rounded thread $d1r=d_{nominal}-0.8746Pr$, the minor diameter of the rounded thread of the double-end stud is calculated. A central axis 214 of the rounded thread of the double-end stud is drawn, thereby obtaining the structure of the rounded thread of the double-end stud of the invention.

According to ISO3800-1993 and GB/T13682-1992, double-end stud with the common thread, double-end stud with the thread of the invention and double-end stud with the thread outside the invention having nominal diameters of 36 mm and 39 mm are subjected to fatigue testing by an axial load fatigue tester. Based on the stress area As calculation method in Table 1 according to ISO3800, the stress areas of different thread structures at the threads are calculated. The static strength safety factor can be calculated based on the fourth strength theory and data of the double-end stud structure. The structural parameters and properties of the common thread, the thread of the invention and the thread outside the invention having nominal diameters of 36 mm and 39 mm are shown in Table 1 and Table 2.

Table 1 Structural parameters/properties of common thread, thread of the invention and thread outside the invention having nominal diameters of 36 mm

| Pitch (mm) / Structural parameters and properties | Common thread | Rounded thread | | | | | |
|---|---|---|---|---|---|---|---|
| | 4 | 5 | 5.5 | 6 | 6.3 | 6.9 | 7.5 |
| Minor diameter (mm) | 31.67 | 31.627 | 31.19 | 30.75 | 30.49 | 29.97 | 29.44 |
| Height (mm) | 1.73 | 1.95 | 2.15 | 2.45 | 2.54 | 2.95 | 3.15 |
| Radius of rounded crest and rounded root (mm) | / | 1.19 | 1.3 | 1.37 | 1.46 | 1.51 | 1.67 |
| Major diameter (mm) | 35.13 | 35.527 | 35.490 | 35.652 | 35.570 | 35.865 | 35.741 |
| Pitch diameter (mm) | 33.4 | 33.577 | 33.340 | 33.202 | 33.030 | 32.915 | 32.591 |
| Stress area at thread (mm$^2$) | 817 | 834.369 | 817.194 | 802.705 | 791.829 | 775.965 | 755.140 |
| Static strength safety factor n | 1.2 | 1.237 | 1.219 | 1.194 | 1.183 | 1.143 | 1.089 |
| Mean stress (Mpa) | 436.6 | 436.6 | 436.6 | 436.6 | 436.6 | 436.6 | 436.6 |
| Stress amplitude (Mpa) | ±62 | ±62 | ±62 | ±62 | ±62 | ±62 | ±62 |
| Frequency (Hz) | 56.3 | 56.5 | 56.2 | 56.6 | 56.5 | 56.3 | 56.6 |
| Number of cycles (N) | $8.535\times10^5$ | $1.5524\times10^6$ | $5\times10^6$ | $5\times10^6$ | $5\times10^6$ | $5\times10^6$ | $5\times10^6$ |
| Form and position of fatigue failure | Fracture at thread: first engaged thread where the bolt engages with the nut | Fracture at thread: first engaged thread where the bolt engages with the nut | Not fail | Not fail | Not fail | Not fail | Not fail |

Table 2 Structural parameters/properties of common thread, thread of the invention and thread outside the invention having nominal diameters of 39 mm

| Pitch (mm) / Structural parameters and properties | Common thread | Rounded thread | | | | | |
|---|---|---|---|---|---|---|---|
| | 4.5 | 5.5 | 6 | 6.3 | 6.9 | 7.5 | 8 |
| Minor diameter (mm) | 34.67 | 34.19 | 33.75 | 33.49 | 32.97 | 32.44 | 32.00 |
| Height (mm) | 1.73 | 2.15 | 2.45 | 2.54 | 2.95 | 3.15 | 3.35 |
| Radius of rounded crest and rounded root (mm) | / | 1.3 | 1.37 | 1.46 | 1.51 | 1.67 | 1.79 |
| Major diameter (mm) | 38.13 | 38.490 | 38.652 | 38.570 | 38.865 | 38.741 | 38.703 |
| Pitch diameter (mm) | 36.4 | 36.340 | 36.202 | 36.030 | 35.915 | 35.591 | 35.353 |
| Stress area at thread (mm$^2$) | 976 | 976.242 | 960.384 | 948.483 | 931.113 | 908.288 | 890.364 |
| Static strength safety factor n | 1.2 | 1.219 | 1.201 | 1.187 | 1.152 | 1.129 | 1.049 |
| Mean stress (Mpa) | 436.6 | 436.6 | 436.6 | 436.6 | 436.6 | 436.6 | 436.6 |
| Stress amplitude (Mpa) | ±62 | ±62 | ±62 | ±62 | ±62 | ±62 | ±62 |
| Frequency (Hz) | 56.4 | 56.4 | 56.9 | 56.5 | 56.4 | 56.2 | 56.6 |
| Number of cycles (N) | $1.0186\times10^6$ | $2.1187\times10^6$ | $5\times10^6$ | $5\times10^6$ | $5\times10^6$ | $5\times10^6$ | $5\times10^6$ |
| Form and position of fatigue failure | Fracture at thread: first engaged thread where the bolt engages with the nut | Fracture at thread: first engaged thread where the bolt engages with the nut | Not fail | Not fail | Not fail | Not fail | Not fail |

As shown in Table 1 and Table 2, in the case of the specified full life of $5\times10^6$ cycles the double-end stud, the invention uses the large pitch, large rounded crest and large rounded root, which greatly improves the fatigue resistance of the double-end stud and ensures no fracture of the double-end stud. However, as the pitch increases, the stress area of the rounded thread decreases, and the static strength property gradually decreases. In order to ensure the static strength safety factor to be not less than the allowable safety factor [n]=1.1, the structural parameters of the double-end stud of the invention can greatly improve the fatigue performance of the double-end stud while ensuring the basic bearing capacity.

In other embodiments of the double-end stud for connection of a blade root of a wind turbine, the thread angle of the rounded thread may be other appropriate angles.

Embodiment 1 of machining method for double-end stud for connection of blade root of wind turbine in the invention:

The machining method for the double-end stud includes the following steps:

(1) blanking: a bar with a required length is cut according to the length of the double-end stud;

(2) heat treatment: after the heat treatment, the bar has a hardness of 300-350 HB and an elongation of not lower than 12%;

(3) contour turning: the contour at two ends, chamfers and the double-end stud are turned;

(4) thread machining: the rounded threads at the two ends are subjected to axial or radial rolling;

(5) surface cleaning: the double-end stud is shot-blasted with steel shots having a diameter of $d_{steel\ shot}=$ (0.1015-0.125)Pr; and

(6) surface anticorrosion treatment: a chrome-free zinc-aluminum coating is applied to the whole double-end stud by spraying or dipping.

In step (4), through the rolling, under the combined action of coarse pitch+rounded thread structure+high-strength material, the thread surface undergoes large plastic deformation under the action of rolling force. Compared with the common thread, the residual stress of the thread surface is significantly increased, which can greatly improve the fatigue resistance of the double-end stud. The calculation formula of the rolling force is:

$$E = 0.250P\sqrt{\frac{HB}{4\delta} + Z \cdot P\left(\frac{1}{2K} + 0.95\right)LF}$$

where E is the rolling force in kN;

P is the pitch of the workpiece in mm;

HB is the hardness of the workpiece;

$\delta$ is the elongation of the workpiece;

K is the number of starts of the thread rolling die;

L is the length of thread of the workpiece in mm;

F is the rolling force correction factor, where F=1 for a 60° metric thread, F=1.5 for a half-round thread, and F=2 for a rectangular thread; and

Z is the cold working hardening coefficient of the workpiece, which is 1-2 for high-strength alloy steel.

For example, in a case of HB=330, $\delta$ = 14% and Z=1.2, the rolling forces of the rounded thread of the double-end stud of the invention and the common thread are shown in Table 3.

**EP 4 617 515 A1**

Table 3 Rolling forces of rounded thread of the invention and common thread in a case of HB=330, $\delta = 14\%$ and Z=1.2

| Common thread | | | | Thread of the invention | | |
|---|---|---|---|---|---|---|
| Parameters | Pitch P | Rolling force correction factor F | Rolling force E/kN | Pitch P | Rolling force correction factor F | Rolling force E/kN |
| 36 | 4 | 1 | 142 | 6.3 | 1.5 | 377 |
| | | | | 6.8 | 1.5 | 416 |
| 39 | 4 | 1 | 142 | 6.3 | 1.5 | 377 |
| | | | | 6.8 | 1.5 | 416 |
| | | | | 7.5 | 1.5 | 472 |

For example, in a case of HB=130, $\delta = 25\%$ and Z=0.2, the rolling forces of the rounded thread of the double-end stud of the invention and the common thread are shown in Table 4.

Table 4 Rolling forces of rounded thread of the invention and common thread in a case of HB=130, $\delta = 25\%$ and Z=0.2

| Common thread | | | | Thread of the invention | | |
|---|---|---|---|---|---|---|
| Parameters | Pitch P | Rolling force correction factor F | Rolling force E/kN | Pitch P | Rolling force correction factor F | Rolling force E/kN |
| 36 | 4 | 1 | 63 | 6.3 | 1.5 | 164 |
| | | | | 6.8 | 1.5 | 181 |
| 39 | 4 | 1 | 63 | 6.3 | 1.5 | 164 |
| | | | | 6.8 | 1.5 | 181 |
| | | | | 7.5 | 1.5 | 205 |

It should be noted that as shown in Table 3, for high-strength materials, the rolling force of the thread should not be too large, otherwise the thread surface will crack during work hardening. As shown in Table 4, for materials with low strength, when the rolling force of the thread is too small, the strengthening effect of the thread surface by machining will be worse. Therefore, for the hardness of 300-350 HB and the elongation of not lower than 12% in the invention, the coarse pitch+rounded thread structure (Pr=(0.153-0.192)$d_{nominal}$) is adopted, which can enhance the strengthening effect of the surface by rolling and greatly extend the fatigue life of the double-end stud.

In the invention, the coarse-pitch thread structure is used, and the steel shots having a larger diameter are used for shot-blasting in step (5), which helps in increasing the surface stress, thereby further improving the fatigue resistance of the double-end stud. During the surface anticorrosion treatment in step (6), since the radius of rounded crest and rounded root of the rounded thread of the invention is larger than that of the common metric thread or metric MJ thread, it is easier to apply the coating uniformly, thereby reducing the coating defects such as lack of coverage, and ensuring the corrosion resistance of the double-end stud. Moreover, since the radius of rounded crest is equal to the radius of rounded root, the transition is smoother, and there is no sharp corner, so that a thicker coating can be applied, which ensures the corrosion resistance and prevents the thread and the anticorrosion coating from bumps, damage and scratches during the installation of the double-end stud.

In addition, the chrome-free zinc-aluminum coating in step (6) belongs to environmentally friendly Dacromet and has a double-layer structure including an undercoat and a topcoat. In this embodiment, the undercoat is a solvent-based coating and is applied 3-4 times, the topcoat is a water-based sealant, curing temperatures of the undercoat and the topcoat are both 180-220°C, and a total thickness of the coating is 8-20 um. The curing temperature is lower, which reduces the influence of high temperature on the residual compressive stress, thereby ensuring the fatigue resistance of the double-end stud.

Based on the above, the double-end stud of the invention uses the coarse pitch and the large radius of rounded crest and rounded root, thereby reducing the stress concentration at the root and the stress area of the thread. Through the shot-blasting with the large-diameter steel shots and the anticorrosion treatment with the low-temperature chrome-free zinc-aluminum coating, the residual compressive stress of the thread surface is increased, thereby avoiding the influence of the anticorrosion treatment temperature on the fatigue resistance. The possibility of corrosion caused by damage of the thread and the coating during the construction is reduced. The fatigue resistance of the double-end stud is improved by the combination of the thread structure and the machining method, which makes the double-end stud better adapt to the connection of a blade root of a wind turbine.

Embodiment 2 of machining method for double-end stud for connection of blade root of wind turbine in the invention: This embodiment is different from Embodiment 1 in that the topcoat is a solvent-based coating, curing temperatures of the undercoat and the topcoat are both 180-220°C, and a total thickness of the coating is 8-25 um.

Embodiment 3 of machining method for double-end stud for connection of blade root of wind turbine in the invention: This embodiment is different from Embodiment 1 in that the chrome-free zinc-aluminum coating is applied to the whole double-end stud by spraying, the undercoat of the chrome-free zinc-aluminum coating is a low-temperature fast-curing coating, a curing temperature of the undercoat is 20-80°C, and a total thickness of the coating is 8-25 um.

Embodiment 4 of machining method for double-end stud for connection of blade root of wind turbine in the invention: This embodiment provides a different surface anticorrosion treatment process, and is different from Embodiment 1 in that the Dacromet coating is a zinc-chrome coating. Of course, in other embodiments, the surface anticorrosion treatment may be one of zinc impregnation, hot dip galvanizing, Teflon and PTEE.

Embodiment 5 of machining method for double-end stud for connection of blade root of wind turbine in the invention: This embodiment provides a different surface cleaning process, and is different from Embodiment 1 in that the surface cleaning process is sand-blasting.

Embodiment 6 of machining method for double-end stud for connection of blade root of wind turbine in the invention: This embodiment provides a different thread machining process, and is different from Embodiment 1 in that the thread machining process is turning.

The above description is only preferred embodiments of the invention and is not intended to limit the invention. The scope of the patent protection of the invention is subject to the claims, and any equivalent structural changes made by using the content of the description and drawings of the invention shall be included in the protection scope of the invention as well.

## Claims

1. A double-end stud for connection of a blade root of a wind turbine, comprising threaded sections at two ends and a smooth section in a middle, an external thread of the threaded section being a rounded thread, the rounded thread comprising a rounded crest, a straight section, a rounded root and a straight section that are connected sequentially, and the straight section being respectively tangent to the rounded crest and the rounded root, wherein a nominal diameter of the rounded thread is $d_{nominal}$=36 mm-40 mm, a pitch of the rounded thread is Pr=(0.153-0.192)$d_{nominal}$, a height of the rounded thread is hr=(0.37-0.44)Pr, and a minor diameter of the rounded thread is d1r=$d_{nominal}$-0.8746Pr.

2. The double-end stud for connection of a blade root of a wind turbine according to claim 1, wherein the external thread of the threaded section is a single-start thread having a thread angle of 60°.

3. A machining method for the double-end stud for connection of a blade root of a wind turbine according to claim 1, comprising blanking, heat treatment, contour turning, thread machining, surface cleaning and surface anticorrosion treatment.

4. The machining method for the double-end stud for connection of a blade root of a wind turbine according to claim 3, wherein a material of the double-end stud after the heat treatment has a hardness of 300-350 HB and an elongation of not lower than 12%.

5. The machining method for the double-end stud for connection of a blade root of a wind turbine according to claim 3 or 4, wherein during the thread machining, the rounded thread is machined by axial or radial rolling.

6. The machining method for the double-end stud for connection of a blade root of a wind turbine according to claim 3 or 4, wherein during the surface cleaning, the double-end stud is shot-blasted with steel shots having a diameter of $d_{steel\ shot}$=(0.1015-0.125)Pr.

7. The machining method for the double-end stud for connection of a blade root of a wind turbine according to claim 3 or 4, wherein during the surface anticorrosion treatment, a chrome-free zinc-aluminum coating is applied to the whole double-end stud by spraying or dipping.

8. The machining method for the double-end stud for connection of a blade root of a wind turbine according to claim 7, wherein the chrome-free zinc-aluminum coating has a double-layer structure comprising an undercoat and a topcoat, the undercoat being a solvent-based coating, the topcoat being a water-based sealant or a solvent-based coating, curing temperatures of the undercoat and the topcoat being both 180-220°C, and a total thickness of the coating being 8-25 um.

9. The machining method for the double-end stud for connection of a blade root of a wind turbine according to claim 7, wherein the chrome-free zinc-aluminum coating has a double-layer structure comprising an undercoat and a topcoat, the undercoat being a low-temperature fast-curing coating, a curing temperature of the undercoat being 20-80°C, and a total thickness of the coating being 8-25 um.

FIG. 1

FIG. 2

FIG. 3

## INTERNATIONAL SEARCH REPORT

| International application No. |
| --- |
| **PCT/CN2024/097033** |

**A. CLASSIFICATION OF SUBJECT MATTER**

F16B35/00(2006.01)i; F16B33/06(2006.01)i; F16B33/00(2006.01)i; B23P15/00(2006.01)i; C21D9/00(2006.01)i

According to International Patent Classification (IPC) or to both national classification and IPC

**B. FIELDS SEARCHED**

Minimum documentation searched (classification system followed by classification symbols)

IPC:F16B B23P C21D

Documentation searched other than minimum documentation to the extent that such documents are included in the fields searched

Electronic data base consulted during the international search (name of data base and, where practicable, search terms used)

CNKI; CNABS; CNTXT; VEN; USTXT; EPTXT; WOTXT: 中船海为高科技, 七一三研究所, 风电, 风机, 风力, 发电机, 叶片, 螺柱, 螺杆, 螺纹杆, 丝杆, 丝杠, 螺纹, 双头, 圆弧, 弧形, 弧型, 公称, 名义, 直径, 外径, 半径, 大径, 小径, 螺距, 牙高, 牙底, wind+, blade, stud, screw, thread+, double, head, arc, round, nominal, mean, outside, diameter, root, tooth

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116877555 A (CSSC HAIWEI HIGH-TECH CO., LTD. et al.) 13 October 2023 (2023-10-13) <br> claims 1-9 | 1-9 |
| A | 王旺球等 (WANG, Wangqiu et al.). "圆弧螺纹连接强度研究 (Study of Arc Thread Connection Strength)" <br> 船舶标准化工程师 (Ship Standardization Engineer), <br> Vol. 51, No. 4, 31 July 2018 (2018-07-31), <br> ISSN: 1005-7560, <br> pages 59-62, and 97 | 1-9 |
| A | CN 109967982 A (CSSC HAIWEI ZHENGZHOU HIGH-TECH CO., LTD.) 05 July 2019 (2019-07-05) <br> description, paragraphs [0002]-[0042], and figures 1-12 | 3-9 |
| A | CN 103044982 A (ZHANG JUN) 17 April 2013 (2013-04-17) <br> entire document | 1-9 |

| ☑ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 July 2024** | **04 August 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/097033** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 109958698 A (CSSC HAIWEI ZHENGZHOU HIGH-TECH CO., LTD.) 02 July 2019 (2019-07-02)<br>      entire document | 1-9 |
| A | JP 2007100858 A (NAGOYA INDUSTRIAL SCIENCE RESEARCH INSTITUTE) 19 April 2007 (2007-04-19)<br>      entire document | 1-9 |

Form PCT/ISA/210 (second sheet) (July 2022)

**INTERNATIONAL SEARCH REPORT**
Information on patent family members

International application No.

**PCT/CN2024/097033**

| Patent document cited in search report | | | Publication date (day/month/year) | Patent family member(s) | | | Publication date (day/month/year) |
|---|---|---|---|---|---|---|---|
| CN | 116877555 | A | 13 October 2023 | CN | 116877555 | B | 14 June 2024 |
| CN | 109967982 | A | 05 July 2019 | None | | | |
| CN | 103044982 | A | 17 April 2013 | CN | 103044982 | B | 10 June 2015 |
| CN | 109958698 | A | 02 July 2019 | CN | 209818480 | U | 20 December 2019 |
| JP | 2007100858 | A | 19 April 2007 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201439785 U
- CN 109967982 A
- CN 209818480 U